# EUROPÄISCHE PATENTANMELDUNG

(11) **EP 4 663 993 A1**
(43) Veröffentlichungstag der Anmeldung: **17.12.2025**
(21) Anmeldenummer: 25181279.8
(22) Anmeldetag: 06.06.2025
(51) Int. Cl.: F16L 5/04, A62C 2/12, E04B 1/94, F24F 11/35

(54) **BRANDSCHUTZTECHNISCHE EINRICHTUNG MIT EINER BRANDSCHUTZKLAPPE**

(30) Priorität: 11.06.2024 DE 202024103082 U
(71) Anmelder: Wildeboer Bauteile GmbH, 26826 Weener (DE)
(72) Erfinder: LEENERS, Frank, 26826 Weener (DE); SPELLER, Frank, 26826 Weener (DE); DORNBUSCH, Rainer, 26826 Weener (DE)
(74) Vertreter: Ter Meer Steinmeister & Partner

(57) **Zusammenfassung**

Brandschutztechnische Einrichtung mit einer in einer Wandöffnung angeordneten Brandschutzklappe (14), dadurch gekennzeichnet, dass zwischen der Laibung (12) der Wandöffnung und der Außenfläche der Brandschutzklappe (14) ein Spalt besteht, der mit einem Lehmmörtel (26) ausgefüllt ist.

## Beschreibung

Die Erfindung betrifft eine brandschutztechnische Einrichtung mit einer in einer Wandöffnung angeordneten Brandschutzklappe.

Brandschutzklappen werden in Lüftungsleitungen eingebaut, damit im Brandfall die Möglichkeit besteht, durch Schließen der Klappe die Ausbreitung des Brandes oder die Ausbreitung von Rauchgasen zu Verhindern.

In EP 3 047 778 B1 wird eine brandschutztechnische Einrichtung mit einer Brandschutzklappe beschrieben, die in eine Öffnung einer aus Holzbaustoffen gebildeten Gebäudewand eingesetzt ist. Das Gehäuse der Brandschutzklappe weist eine Ummantelung auf, die den Zwischenraum zwischen dem äußeren Umfang der Brandschutzklappe und der Laibung der Wandöffnung ausfüllt. Dadurch wird nicht nur die Ausbreitung von Hitze und Gasen durch diesen Zwischenraum verhindert, sondern auch ein besserer Schutz der Laibung der Gebäudewand gegen Abbrand erreicht. Wenn die Länge der Ummantelung kleiner oder größer ist als die Dicke der Gebäudewand, so wird die Ummantelung bzw. die Gebäudewand durch eine Zurüstung ergänzt, damit die Länge der Fuge zwischen der Ummantelung und der Laibung der Wandöffnung maximiert wird, so dass der Brand länger braucht, sich durch diese Fuge hindurch auszubreiten.

Aufgabe der Erfindung ist es, eine Einrichtung dieser Art zu schaffen, die sich einfacher installieren lässt und insbesondere für den nachhaltigen Einbau der Brandschutzklappe beispielsweise in Lehmtrockenwänden oder in Wänden aus Lehmbausteinen geeignet ist

Diese Aufgabe wird erfindungsgemäß dadurch gelöst, dass zwischen der Laibung der Wandöffnung und der Außenfläche der Brandschutzklappe ein Spalt besteht, der mit einem Lehmmörtel ausgefüllt ist.

Erfindungsgemäß braucht die Brandschutzklappe keine Ummantelung aufzuweisen, die exakt an das Innenmaß der Wandöffnung angepasst ist. Stattdessen wird der Zwischenraum mit dem Lehmmörtel ausgefüllt. Dadurch werden die Genauigkeitsanforderungen bei der Herstellung der Ummantelung aber auch bei der Herstellung der Wandöffnung erheblich verringert, so dass die Einrichtung sich einfacher und kostengünstiger installieren lässt. Durch den Lehmmörtel können auch größere Zwischenräume mit einer Breite von bis zu 50 mm und mehr überbrückt werden, so dass die Wandöffnung auch sehr grob, beispielsweise mit einer Kettensäge, hergestellt werden kann und dennoch eine zuverlässige Abdichtung erreicht wird.

In der Bautechnik wird zunehmend der Einsatz nachhaltiger Baustoffe angestrebt. So werden Gebäudewände häufig als Lehmtrockenbauwände ausgeführt, bestehend aus einem Ständerwerk, in der Regel aus Holz, das beidseitig mit Lehmbauplatten beplankt ist. Es werden auch zunehmend massive Wände aus Lehmbausteinen errichtet. Die brandschutztechnische Einrichtung gemäß der Erfindung integriert sich sehr gut in dieses Nachhaltigkeitskonzept.

Vorteilhafte Ausgestaltungen und Weiterbildungen der Erfindung sind in den Unteransprüchen angegeben.

Der Lehmmörtel kann faserige brennbare oder nicht brennbare Zuschlagsstoffe enthalten. Dadurch wird eine größere Festigkeit des Lehmmörtels erreicht, so dass sich auch größere Zwischenräume zwischen der Brandschutzklappe und der Laibung der Wandöffnung überbrücken lassen. Bevorzugt sind Zuschlagsstoffe aus Naturfasern wie beispielsweise Pflanzenteile und -fasern, Tierhaare oder zerkleinertes Holz. Ein besonders geeigneter Zuschlagsstoff ist Stroh. Die Faserlänge kann zwischen 1 und 6 cm betragen und liegt vorzugsweise in der Größenordnung von 3 cm. Mithilfe solcher Zuschlagsstoffe lässt sich ein Lehmmauermörtel mit einer Festigkeitsklasse M2 (>= 2,0N/m², Haftscherfestigkeit >= 0,04N/mm²) erreichen.

In einer weiteren vorteilhaften Ausgestaltung sind die Oberfläche der mit Lehmmörtel gefüllten Fuge sowie in Teilbereichen des direkt an der Fuge angrenzende Wandbereichs und Teilbereich des Brandschutzklappengehäuses oder Ummantelung mit Bewehrungsstreifen, beispielsweise aus Jute oder Glasfasergewebe, abgedeckt werden und zusätzlich mit Mörtelputz oder Lehmputz bedeckt werden. Dadurch wir die Fuge weiter gestärkt bzw. gefestigt und die Feuerwiderstandsfähigkeit weiter erhöht.

Das Gehäuse der Brandschutzklappe kann eine Ummantelung aufweisen, jedoch ist dies nicht zwingend. Wenn der Zwischenraum zwischen dem Metallgehäuse der Brandschutzklappe und der Laibung sehr groß ist, kann eine Ummantelung eingesetzt werden, damit der mit dem Lehmmörtel zu überbrückende Zwischenraum verringert wird. In jedem Fall kann der Lehmmörtel den Zwischenraum auf der gesamten Dicke der Wand ausfüllen, so dass sich die Einrichtung in Wänden mit unterschiedlicher Dicke installieren lässt, ohne dass besondere Anpassungen der Brandschutzklappe oder der Ummantelung erforderlich sind.

Im folgenden werden Ausführungsbeispiele anhand der Zeichnungen näher erläutert. Es zeigen:
- Fig. 1: Eine Öffnung einer Gebäudewand, in der eine Brandschutzklappe mittels eines Lehmmörtels fixiert ist;
- Fig. 2 und 3: Ansichten entsprechend Fig. 1 für spätere Phasen des Installationsprozesses;
- Fig. 4: einen Schnitt durch die Gebäudewand mit der fertig installierten Brandschutzklappe;
- Fig. 5-8: Darstellungen entsprechend Fig. 1-4 für eine brandschutztechnische Einrichtung gemäß einem anderen Ausführungsbeispiel; und
- Fig. 9: eine Brandschutzklappe in einer Öffnung einer Gebäudewand, die eine größere Dicke aufweist.

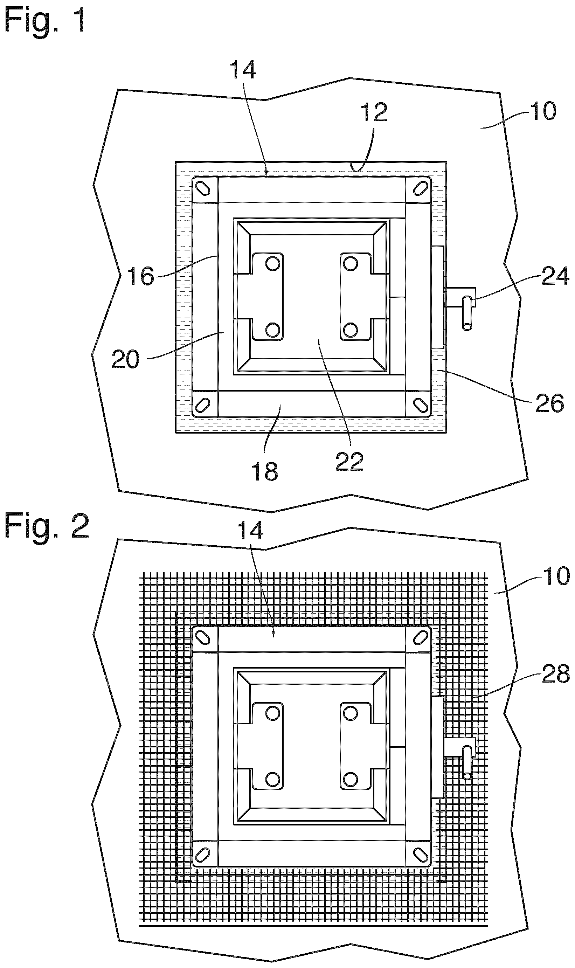

Gemäß Fig. 1 weist eine Gebäudewand 10, beispielsweise eine Lehmtrockenbauwand, eine Öffnung auf, die durch eine Laibung 12 begrenzt wird und in die eine Brandschutzklappe 14 eingesetzt ist. Die Brandschutzklappe weist ein rohrförmiges bzw. Kanalförmiges Gehäuse 16 aus Blech auf, das auf beiden Seiten aus der Wandöffnung herausragt und an jedem Ende einen Anschlussflansch oder Anschlussstutzen 18 bildet, der den Anschluss an eine nicht gezeigte Lüftungsleitung ermöglicht. Im Bereich der Wandöffnung weist das Gehäuse 16 eine Einschnürung bzw. Sicke 20 auf. Im Inneren des Gehäuses 16 ist im Bereich dieser Einschnürung / Sicke 20 ein Klappenblatt 22 angeordnet, dass um eine diametral durch das Gehäuse 16 verlaufende Achse schwenkbar ist. In Fig. 1 ist das Klappenblatt in der geschlossenen Stellung gezeigt. In einem außerhalb der Wandöffnung gelegenen Abschnitt weist das Gehäuse 16 außenseitig einen Antrieb 24 für das Klappenblatt auf. Mit Hilfe des Antriebs 24 lässt sich das Klappenblatt in eine Position schwenken, in der das Klappenblatt etwa parallel zur Längsachse des Gehäuses 16 orientiert ist. In dieser Stellung ist die Klappe geöffnet und die Luft kann an beiden Seiten des Klappenblattes entlangströmen.

Bei der Montage wird der die Brandschutzklappe mithilfe nicht gezeigter Haltestege provisorisch an der Gebäudewand 10 befestigt. Der ringförmige bzw. umlaufende Zwischenraum zwischen der Laibung 12 und der äußeren Umfangsfläche des Gehäuses 16, der durch die Einschnürung / Sicke 20 noch vergrößert wird, wird dann mit einem Faserverstärkten Lehmmörtel 26 ausgefüllt, so dass die Wandöffnung außerhalb der Brandschutzklappe 14 gasdicht verschlossen wird und zugleich ein sicherer Sitz der Brandschutzklappe in der Wandöffnung sichergestellt wird.

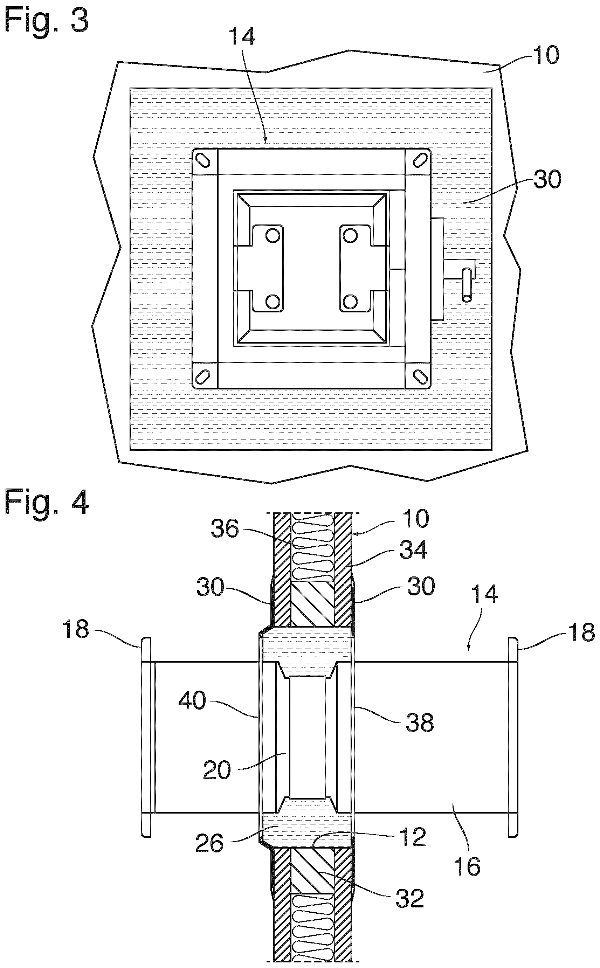

Auf beiden Seiten der Gebäudewand 10 werden dann der Lehmmörtel und die Flächen der Gebäudewand, die die Wandöffnung umgeben, mit Bewehrungsstreifen 28 abgedeckt, wie in Fig. 2 gezeigt ist. Bei den Bewehrungsstreifen kann es sich beispielsweise um Jute- oder Glasfasergewebe handeln. Anschließend wird, wie in Fig. 3 gezeigt ist, auf die Bewehrungsstreifen 28 und die angrenzenden Wandflächen ein Lehmputz 30 aufgetragen.

In Fig. 4 ist die Gebäudewand 10 im Querschnitt gezeigt. Sie weist ein Ständerwerk 32 aus Holz auf, das auf beiden Seiten mit Lehmbauplatten 34 beplankt ist. Der Zwischenraum zwischen den Lehmbauplatten ist mit einem Isoliermaterial 36 ausgefüllt. Das Ständerwerk 32 bildet unter anderem einen Rahmen, der die Einbauöffnung für die Brandschutzklappe 14 definiert und deren Laibung 12 bildet.

Das Gehäuse 16 der Brandschutzklappe 14 weist beiderseits der Einschnürung / Sicke 20 flanschartige Versteifungselemente / Versteifungssicke 38 auf, an denen auch die zuvor erwähnten Haltestege angreifen können. Der äußere Umriss der Versteifungselemente 38, 40 ist jedoch kleiner als der Innenquerschnitt der Wandöffnung, so dass sich das Gehäuse der Brandschutzklappe in die Wandöffnung einsetzen lässt und zwischen den Versteifungselementen und der Laibung 12 ein Zwischenraum verbleibt, der das Einbringen und Verdichten des Lehmmörtels ermöglicht.

Im gezeigten Beispiel ist der Abstand zwischen den Versteifungselementen 38, 40 größer als die Dicke der Gebäudewand 10. Der Lehmmörtel 26 füllt jedoch den gesamten Zwischenraum zwischen den Versteifungselementen 38, 40 aus und bildet auf der Seite des Versteifungselements 40 eine schräg verlaufende Fläche, die an den Rand des Versteifungselements 40 angrenzt und mit einer Kelle oder einem Messer glattgestrichen werden kann. Im Endzustand wird diese schräg verlaufende Fläche des Lehmmörtels durch die Bewehrungsstreifen 28 und dem Lehmputz 30 abgedeckt. Der Lehmmörtel 26 ermöglicht es somit, nicht nur Maßunterschiede in radialer Richtung zwischen der Brandschutzklappe und der Wandöffnung auszugleichen, sondern auch Maßunterschiede in axialer Richtung. Das hat den Vorteil, dass die Gehäuse der Brandschutzklappen 14 in Großserie gefertigt werden können, ohne dass der Abstand zwischen den Versteifungselementen 38, 40 an die Dicke der jeweiligen Gebäudewand angepasst werden muss, in welche die Brandschutzklappe eingesetzt werden soll.

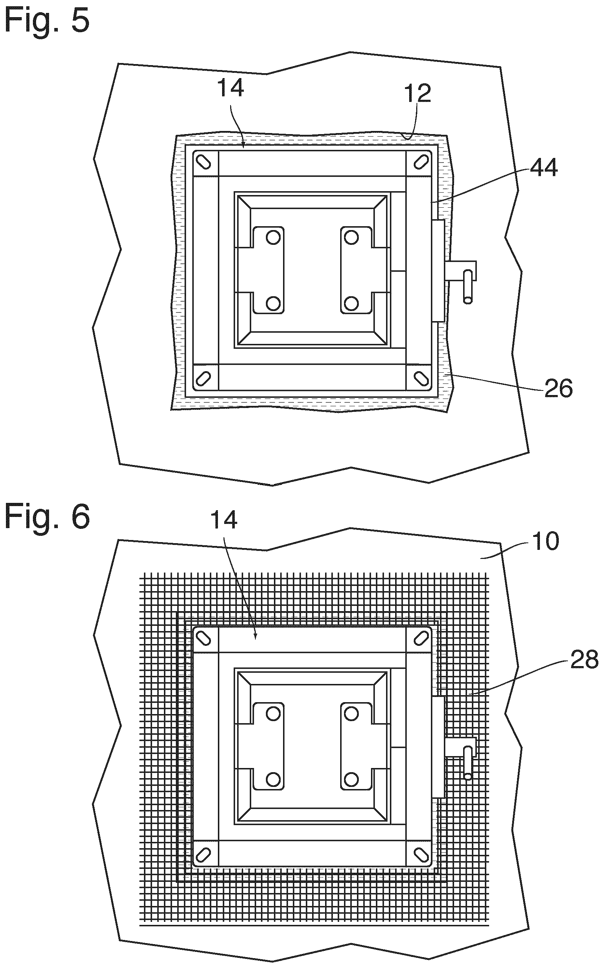

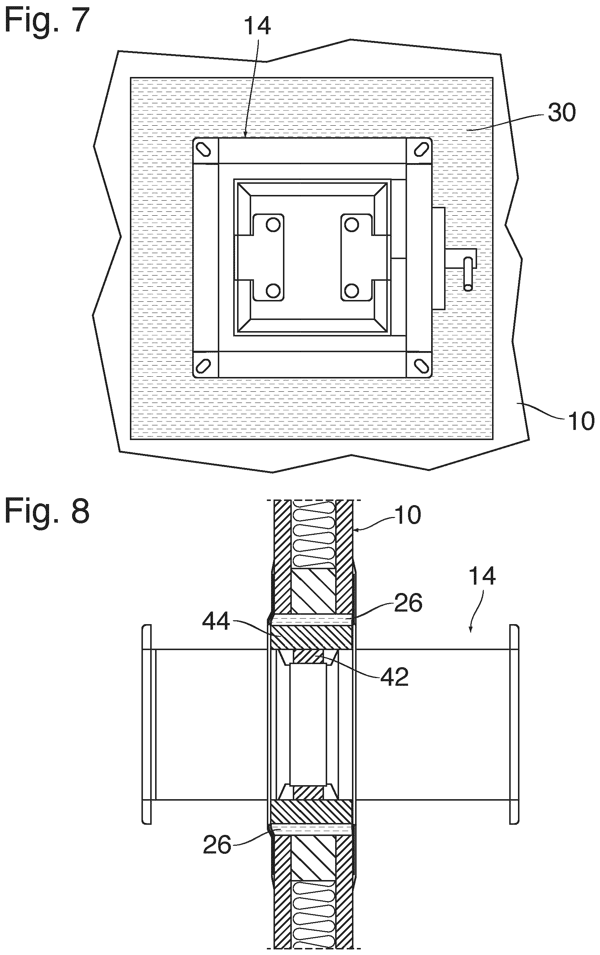

Fig. 5 bis 8 zeigen ein abgewandeltes Ausführungsbeispiel, bei dem die Brandschutzklappe 14 im Bereich der Einschnürung / Sicke 20 von einer Ummantelung aus feuerfesten und hitzebeständigem Material umgeben ist. Speziell wird die Ummantelung in diesem Beispiel durch einen inneren Ring 42 (Fig. 8), der in der Einschnürung / Sicke 20 liegt und dessen Außendurchmesser mit der Außenwand des Gehäuses 16 bündig ist, und einem Außenring 44 gebildet, der die Einschnürung 20 und den inneren Ring vollständig abdeckt. Der Lehmmörtel 26 füllt in diesem Fall den Zwischenraum zwischen dem Außenring 44 und der Laibung 12 aus.

Bei der Herstellung der Wandöffnung wurde die Laibung 12 in diesem Beispiel nur sehr grob bearbeitet, so dass der von dem Lehmmörtel ausgefüllte Querschnitt der Wand (Fig. 5) eine sehr unregelmäßige Form hat.

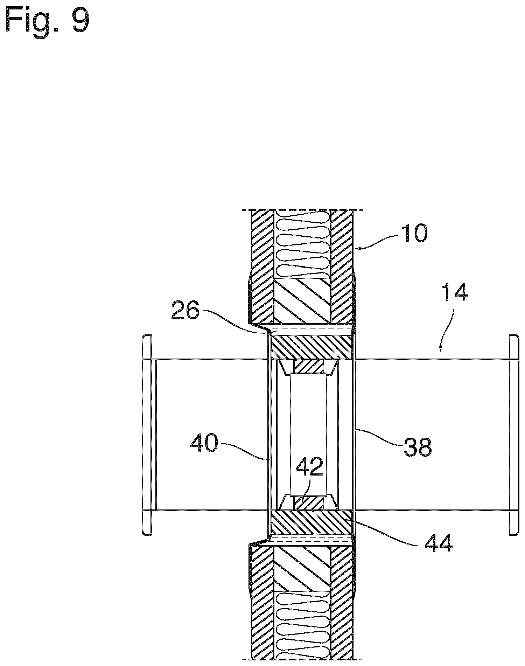

Fig. 9 zeigt ein Beispiel bei dem die Dicke einer Gebäudewand 10 größer ist als der Abstand zwischen den Versteifungselementen 38, 40. In diesem Fall bildet der Lehmmörtel 26 eine schräg einwärts verlaufende Oberfläche.

In den hier gezeigten Ausführungsbeispielen hat das Gehäuse 16 einen quadratischen Querschnitt. Wahlweise könnte das Gehäuse jedoch auch einen anderen, beispielsweise kreisförmigen Querschnitt haben. Ebenso ist es denkbar, dass die Brandschutzklappe nicht in eine Gebäudewand im eigentlichen Sinne, sondern in eine Gebäudedecke eingesetzt ist. Weiterhin könnte die Brandschutzklappe anstatt Einschnürung und Versteifungselemente auch Sicken aufweisen, wie sie beispielsweise beim Bördeln entstehen.

## Patentansprüche

1. Brandschutztechnische Einrichtung mit einer in einer Wandöffnung angeordneten Brandschutzklappe (14), **dadurch gekennzeichnet, dass** zwischen der Laibung (12) der Wandöffnung und der Außenfläche der Brandschutzklappe (14) ein Spalt besteht, der mit einem Lehmmörtel (26) ausgefüllt ist.

2. Einrichtung nach Anspruch 1, bei der der Lehmmörtel (26) faserige Zuschlagsstoffe, insbesondere pflanzliche Zuschlagsstoffe in der Form von Naturfasern enthält.

3. Einrichtung nach Anspruch 2, bei der die Faserlänge der Zuschlagsstoffe zwischen 1 und 6 cm beträgt.

4. Einrichtung nach einem der vorstehenden Ansprüche, bei der das Gehäuse (16) der Brandschutzklappe zwei außenseitig umlaufende, in Abstand zueinander angeordnete Versteifungselemente oder Sicken (38, 40) aufweist und der Lehmmörtel (26) den Zwischenraum zwischen den Versteifungselementen vollständig ausfüllt.

5. Einrichtung nach Anspruch 4, bei der der Abstand zwischen den Versteifungselementen oder Sicken (38, 40) von der Dicke der Gebäudewand (10) verschieden ist und die er Lehmmörtel (26) die Laibung (12) der Wandöffnung auf ihrer gesamten Tiefe bedeckt.

6. Einrichtung nach einem der vorstehenden Ansprüche, bei der die Brandschutzklappe (14) ein Gehäuse (16) aufweist, das zumindest abschnittsweise von einer Ummantelung (42, 44) umgeben ist, und der Lehmmörtel (26) den Zwischenraum zwischen der Ummantelung und der Laibung (12) der Wandöffnung ausfüllt.

7. Einrichtung nach Anspruch 6, bei der die Länge der Ummantelung (42, 44) von der Dicke der die Wandöffnung bildenden Gebäudewand (10) verschieden ist und der Lehmmörtel (26) die Laibung (12) der Wandöffnung auf ihrer gesamten Tiefe bedeckt.

8. Einrichtung nach einem der vorstehenden Ansprüche, bei der die Laibung (12) der Wandöffnung eine unregelmäßige Form hat.
